# EUROPEAN PATENT SPECIFICATION

(11) **EP 3 727 891 B1**
(45) Date of publication and mention of the grant of the patent: **24.08.2022**
(21) Application number: 18833535.0
(22) Date of filing: 18.12.2018
(51) Int. Cl.: B60C 11/03, B60C 11/13

(54) **TREAD FOR A PNEUMATIC TYRE**
LAUFFLÄCHE FÜR EINEN LUFTREIFEN
BANDE DE ROULEMENT POUR PNEUMATIQUE

(30) Priority: 22.12.2017 IT 201700149338
(43) Date of publication of application: 28.10.2020
(73) Proprietor: Bridgestone Europe NV/SA, 1932 Zaventem (BE)
(72) Inventor: SPARACINO, Andrea, 00128 Roma (IT); SANTANGELI, Fabio, 00128 Roma (IT); DE LIDDO, Marco, 00128 Roma (IT)
(74) Representative: Marchetti, Alessio
(86) International application number: PCT/IB2018/060287
(87) International publication number: WO 2019/123277

(56) References cited:
- EP-A1- 3 189 982
- EP-A1- 3 231 639
- EP-A2- 0 729 854

## Description

### Technical field of the invention

The present invention refers to a tread for pneumatic tyres. In particular, it refers to a tread for an all season (four seasons) pneumatic tyre, whose shape makes it particularly effective with any type of surface condition: dry, wet or snow-covered.

### Background

It is known that pneumatic tyres, especially for cars, are designed according to the use for which they are intended, and as a function of the environmental conditions in which they are to be used.

Hence, on the one hand, there are so-called summer pneumatic tyres, which are particularly high-performing at high temperatures on average, whose compounds and geometry are well suited for contact with a hot and dry road surface, on the other hand there are so-called winter pneumatic tyres, which are particularly high-performing at low temperatures on average, whose compounds and geometry are well suited for contact with cold and possibly wet or snow-covered road surfaces.

It is also known that in order to obtain good performance from a pneumatic tyre under - in one way or another - extreme conditions, technical (form and/or physical/chemical) characteristics are also required that are substantially exaggerated and therefore such that they are not able to satisfy the user under conditions that differ greatly from those for which the pneumatic tyre has been designed. In other words, a snow pneumatic tyre cannot be high-performing in summer on very hot and dry surfaces, just as a summer pneumatic tyre cannot be usefully used in winter on snow-covered surfaces.

This is because, essentially, the characteristics of the form and the type of compounds that a pneumatic tyre must have in order to perform well during the summer are often incompatible with those that a pneumatic tyre must have in order to perform well during the winter.

Over time therefore pneumatic tyres have been developed that can represent a compromise in terms of performance and that can be used throughout the year with good results. This category of pneumatic tyres is called "all season" or "four seasons." It is to be understood however that under extreme conditions, precisely because it is the result of a compromise in terms of efficiency, a four seasons pneumatic tyre cannot replace a seasonal pneumatic tyre (either winter or summer). For this reason, four seasons pneumatic tyres are to be considered as such mainly where the climate is such that there are no extreme variations between the four climatic seasons.

It is also clear that in order to also address market based problems, four seasons pneumatic tyres cannot be designed that, for performance reasons, degrade too quickly due to "summer" use. The problem is therefore strongly felt of being able to optimize the winter performance of a four seasons pneumatic tyre, without affecting the behavior thereof on hot and dry surfaces.

Furthermore, the same winter use of a pneumatic tyre poses problems due to the different conditions wherein the pneumatic tyre can be used. For example, different behavior and performance are required in the case of wet surfaces (for example due to rain) compared to snow-covered surfaces and again compared to icy surfaces.

In fact, in the case of a wet surface, one of the most important features is the ability to drain the water present between the surface and the tread (for example, to prevent/limit aquaplaning phenomena).

For this purpose, the shape of the tread must be such as to create channels that are suitable for the rapid outflow of water, both in the direction of travel, and transversely to this. To this end, the elements of the tread must be shaped and positioned in a suitable manner.

By contrast, the shape and/or the positioning of the tread elements must be different in the case wherein the behavior of the pneumatic tyre on snow is to be optimized. In this case, those forms and/or positions which retain snow between the blocks, thereby increasing the grip of the tread on the ground, should be given priority.

The two configurations tend towards opposing designs and positioning for the tread elements and therefore, today, a pneumatic tyre that has a tread design that is optimal both on wet and snow-covered surfaces, does not exist.

EP3231639 discloses a pneumatic tyre comprising a tread portion which is provided with a plurality of oblique main grooves and oblique land regions; the oblique land regions each divided by a first vertical groove into a shoulder blockand a middle block disposed axially inside thereof; the shoulder block is provided with a plurality of transverse sipes whose angles with respect to the tyre axial direction are less than 45 degrees; the middle block is provided with a plurality of vertical sipes whose angles with respect to the tyre circumferential direction is less than 45 degrees.

EP0729854 discloses a vehicle tyre for winter use having a tread profile with circumferential and lateral channels forming, on each side of the tyre equator, a row of shoulder blocks and a pair of central block rows, with all blocks having fine lamellae cuts. Both the adjacent blocks of the circumferential row nearer the tyre equator and also the blocks of the adjacent block rows are separated by channels with combined broad and narrow sections. Narrow channel sections are shallower than the broad channel sections.

EP3189982 discloses a pneumatic tyre which is provided in the tread portion with zigzag middle main grooves and shoulder main grooves to define middle land regions therebetween. The middle main groove is composed of alternately-arranged, oppositely-inclined long first oblique segments and short second oblique segments. The middle land regions are provided with middle transverse grooves shallower than the middle main grooves. The first oblique segments are inclined axially outwardly toward the opposite direction to the intended tyre rotational direction. The middle transverse grooves are inclined to the same direction as the first oblique segments or in parallel with the tyre axial direction. The axially inner end of each of the middle transverse grooves is connected to one of the second oblique segments so as to include at least a part of an axially outwardly protruding outside corner portion of the middle main groove.

For the purposes of the present invention, the term "tread element" refers to a portion of the tread pattern that is repeated, identical to itself, along the entire length of the tread.

The term "tread component," or simply "component", refers to any tread block, or else a rib of the tread, regardless of the form and/or positioning thereof.

The term "tread block", or simply "block", refers to any tread block of the tread, regardless of the form and/or positioning thereof.

The term "contact surface" refers to that portion of a surface of a block that, during the rolling of the pneumatic tyre, comes into contact with the ground.

The term "leading edge" refers to an edge of the block along the profile of the contact surface that, during the rolling of the pneumatic tyre, meets the soil prior to the contact surface.

The term "trailing edge" refers to an edge of the block along the profile of the contact surface that, during the rolling of the pneumatic tyre, leaves the ground after the contact surface.

The term "leading surface" refers to a wall of the block that is contiguous to the contact surface by means of the leading edge.

The term "trailing surface" refers to a wall of the block that is contiguous to the contact surface by means of the trailing edge.

The term "groove" refers to the tread portion that separates two adjacent blocks.

The term "grooved channel", or simply "channel", refers to the inner portion of a groove, generally recessed in relation to the contact surface of the adjacent blocks.

The term "sipe" refers to a thin and generally narrow groove on a tread component, obtained by the molding of the pneumatic tyre, that is intended to improve the performance of the pneumatic tyre on snow and ice.

### Summary of the invention

The technical problem addressed and resolved by the present invention is therefore that of providing a tread having a design such as to represent the best possible compromise and to therefore enable effective use of the pneumatic tyre throughout the entire year, and in particular both under wet and snow-covered surface conditions, especially when braking.

This is achieved by means of a tread as defined in claim 1.

Further characteristics of the present invention are defined in the corresponding dependent claims.

### Brief description of the figures

The advantages, together with the characteristics and the way of usage of the present invention, will become clear from the following detailed description of its preferred embodiments given purely by way of non-limiting example.

Reference will be made to the figures of the accompanying drawings, wherein:
- Figure 1 is a plan view of a portion of a tread according to the present invention;
- Figure 2 is a detail view of one of the lateral wings of a tread element according to the invention;
- Figures 2A and 2B are exemplary detail views of possible connecting elements between the tread blocks;
- Figures 3A, 3B, 3C, 3D are sectional views of the tread element of Figure 2, taken respectively along the lines A-A, A'-A', B-B, C-C;
- Figure 4 is a detail view of the vertex of the "V" of a tread element of Figure 1; and

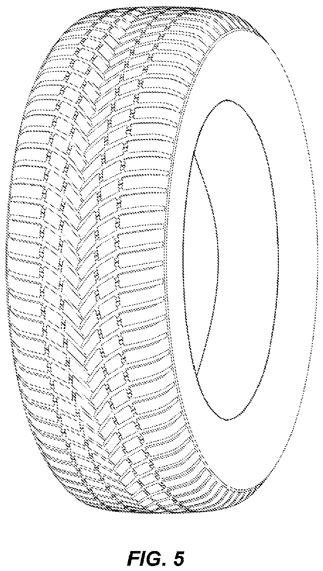

- Figure 5 is a partial perspective view of a pneumatic tyre according to the present invention.

### Detailed description of embodiments of the invention

Some embodiments of the present invention will be described below, making reference to the above figures.

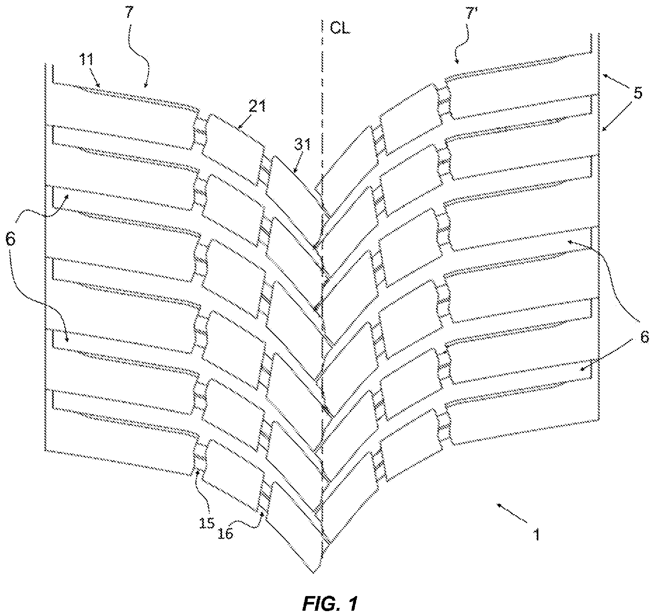

With initial reference to Figure 1, this shows a tread 1 for a four seasons pneumatic tyre according to the present invention,

The tread 1 comprises a sequence of tread elements 5 placed in succession and interspersed with first grooves 6.

Each tread element 5 has an overall "V" shape with two lateral wings 7, 7', symmetrical to one another in relation to a center line CL of the tread. For simplicity in the discussion, the shape of the tread will be described in referring only to the wing 7 formed by three tread blocks 11, 21, 31 (a shoulder block, a median block and a central block) separated by second grooves 15, 16.

The "V" shape of the tread elements is considered to be particularly effective, especially during braking, and especially on wet and/or snow-covered surfaces.

This is due to the fact that during the rotation of the pneumatic tyre, the blocks that form the wings of the "V" of each element come into contact with the ground, one after the other (from the center of the pneumatic tyre towards the outside), therefore modulating the overall performance of the pneumatic tyre in terms of adherence.

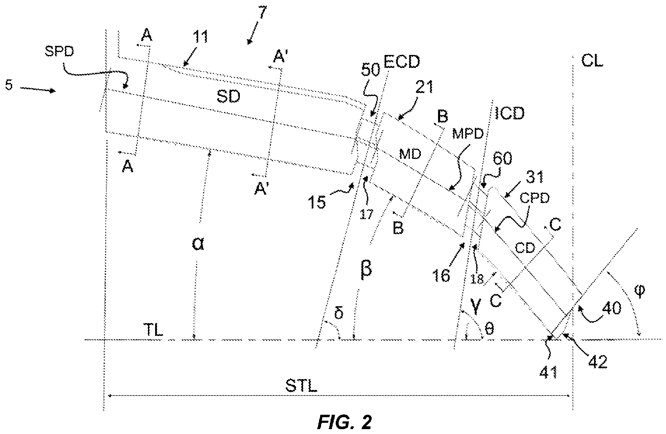

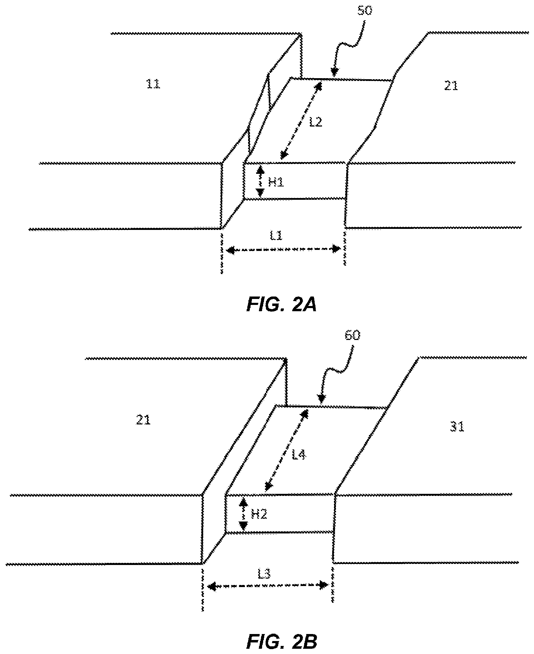

Referring now to Figure 2, this shows in more detail a single wing 7, of the "V" shaped tread element 5.

According to the present invention, the three tread blocks 11, 21, 31 comprise at least one shoulder block 11 which has a first major extension direction SPD inclined by a first angle α with respect to a transverse line TL, orthogonal to a center line CL of the tread.

According to the present invention, this first angle α is between 8° and 12°.

In consideration of other factors that will be discussed below, much lower angles than those indicated, up to the limit of 0°, would result in excessive noise during the rolling of the pneumatic tyre. The noise is due to the fact that the leading edge 13 of the shoulder block 11 would meet the ground at the same instant (or almost) over the entire longitudinal evolution of the block. Since this is naturally a repetitive pattern, this would lead to the emission of noise at frequencies that are dependent upon the rolling speed.

This behavior would be aggravated by the fact that, for the purposes of the present invention, the shoulder block 11 may preferably have a longitudinal extension dimension SD equal to at least 40% of a transverse semi-dimension STL of the tread or, preferably, at least 50%. According to a preferred embodiment, the longitudinal extension dimension SD is selected such as to be equal to approximately 55% of the transverse semi-dimension STL of the tread.

In particular, according to some embodiments, the first angle α can be between 9° and 11 °, or even more preferably equal to approximately 10°.

In particular, a value of the first angle α which, according to the present invention, optimizes the behavior of a pneumatic tyre of the size 205/55 R16 is 11.4°.

According to the present invention, the three tread blocks 11, 21, 31 of each "V-wing", also comprise a median block 21 which has a second major extension direction MPD inclined by a second angle β with respect to the transverse line TL, orthogonal to center line CL of the tread.

In particular, according to some embodiments, the second angle β can be between 27° and 47°, or even more preferably equal to approximately 36°.

In particular, a value of the second angle β which, according to the present invention optimizes the behavior of a pneumatic tyre of the size 205/55 R16, is 30.5 °.

Advantageously, according to some embodiments, the size of the median block 21 has a longitudinal extension dimension MD equal to at least 20% of a transverse semi-dimension STL of the tread. According to a preferred embodiment, the longitudinal extension dimension MD is chosen to be equal to about 22% of a transverse semi-dimension STL of the tread.

Furthermore, according to the present invention, the three tread blocks 11, 21, 31 comprise a central block 31 which in turn has a third major extension direction CPD inclined by a third angle γ with respect to the transverse line TL, orthogonal to the center line CL of the tread.

In particular, according to some embodiments, the third angle γ can be between 46° and 66°, or even more preferably equal to approximately 56°.

In particular, a value of the third angle γ which optimizes the behavior of a pneumatic tyre of the size 205/55 R16, is 54.2°.

In some embodiments that are intended for a ultra-high performance (UHP) winter pneumatic tyre, for example with the dimensions SW 245-315 mm, the third angle γ maximizes the drainage of water on wet surfaces. In this way, on wet surfaces, the aquaplaning limit increases and the braking distances reduce. Advantageously, according to some embodiments, the central block 31 has a longitudinal extension dimension CD of at least 20% of a transverse semi-dimension STL of the tread.

According to a preferred embodiment, the longitudinal extension dimension CD is selected such as to be equal to about 21% of a transverse semi-dimension STL of the tread.

As described above, the geometry of the three blocks 11, 21, 31 has been defined as a function of the respective major extension directions thereof. In the present invention, "major extension direction" refers to the direction of a line that best represents the evolution of the respective block.

For example, such a line could be identified in a longitudinal median line of the same block. Or, in the case of blocks - in particular the shoulder block - which have a substantially rectilinear longitudinal evolution (or in any case with a particularly large radius of curvature), the major extension direction could be identified with the longitudinal line that joins two consecutive extreme vertices of a block. It is assumed that the two definitions can be considered equivalent by virtue of the geometrical characteristics of the blocks which, according to the present invention, have substantially constant respective transverse dimensions and, as mentioned, an almost rectilinear evolution.

It should also be noted that the first angle α, the second angle β and the third angle γ can also be varied, whilst remaining within the indicated ranges, as a function of the size of the pneumatic tyre.

In particular, the specific values indicated above, may for example be in relation to a reference pneumatic tyre with the dimensions 205/55 R16. Pneumatic tyres of different sizes may have different α, β and γ angles.

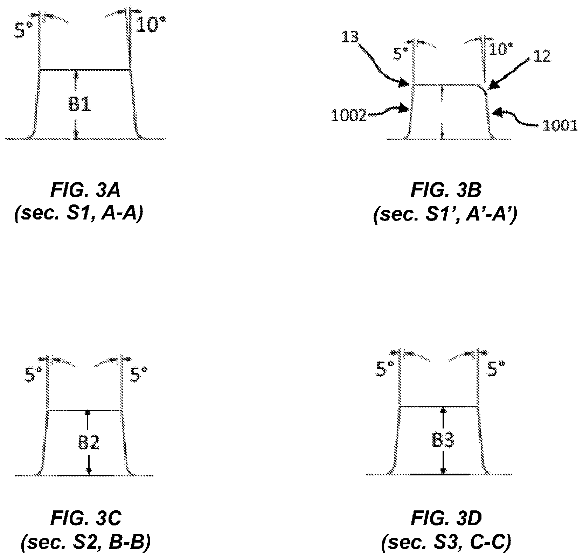

The following Figures 3A, 3B, 3C, 3D, show some sectional views, taken along respective lines identified in Figure 2.

According to some embodiments of the present invention, the shoulder block 11 has a first cross-section S1, taken along the line A-A of Figure 2, A-A having a substantially trapezoidal form, wherein a first leading surface 1001 of the block 11 is inclined approximately 10° with respect to a direction normal to the tread, and a second trailing surface 1002 inclined about 5° with respect to said direction normal to the tread.

Advantageously, the shoulder block 11 can have, at least in a portion thereof, a beveled trailing edge 12. From this derives a cross-section, for example taken along the line A'-A' of Figure 2, featuring a slightly different evolution, in particular visible in Figure 3B.

The presence of a beveled leading edge results in greater efficiency during the action of braking, avoiding or at least reducing the effect of the rolling of the trailing edge. This rolling effect is typical and particularly accentuated when the trailing edge is substantially shaped as a sharp edge, and therefore the friction during braking produces deformation of the contact surface causing a reduction in the surface area of the rubber that is in contact with the ground, leading to a reduction in terms of friction and therefore grip.

According to the present invention, the shoulder block 11, and the median block 21 are separated by an external groove 15 of said second grooves 15, 16.

The outer groove 15 has an outer grooved channel 17 which has a first channel direction ECD that is inclined in relation to the transverse line TL by an external angle δ of less than 90°, thus ensuring that the channel direction ECD is not exactly parallel to the center line CL of the pneumatic tyre. This is advantageous in terms of performance on snow.

According to some embodiments, the outer grooved channel 17 is not rectilinear, preferably "Z" shaped, with the aim of improving the performance of the pneumatic tyre in the case of braking on a snow-covered surface.

According to some embodiments, within the outer grooved channel 17 further tread elements can be provided, in particular a first connecting element 50 between the shoulder block 11, and the median block 21.

Figure 2A shows, by way of example and schematically, the structure thereof.

This first connecting element 50 preferably has a height that is less than the height H1 of the connected blocks (the shoulder block 11 and the median block 21).

In addition, the width L1 thereof (transverse dimension of the channel) is preferably less than the length L2 thereof (the longitudinal dimension of the channel). According to a preferred embodiment, the width L1 can be chosen to be equal to approximately 3% of the transverse semi-dimension STL of the tread.

Again with reference to Figure 2, the median block 21 preferably has a longitudinal evolution that is substantially rectilinear.

Furthermore, it has a second cross-section S2, taken along the line B-B of Figure 2, that is substantially trapezoidal, as can be appreciated in Figure 3C. This second cross-section S2, substantially trapezoidal, has respective oblique sides inclined about 4°-6° with respect to the direction normal to the tread, preferably 5°.

According to the present invention, the median block 21 and the central block 31 are separated by an inner groove 16 of said second grooves 15, 16.

This inner groove 16 has, in turn, an inner grooved channel 18 having a channel direction ICD that is inclined with respect to the transverse line TL by an internal angle θ of less than or equal to 90°, thus ensuring that the channel direction ECD is not exactly parallel to the center line CL of the pneumatic tyre. This is advantageous in terms of performance on snow.

According to a preferred embodiment, the inner grooved channel 18 is substantially rectilinear.

Within the inner grooved channel 18 a second connecting block 60 may be provided between the median block 21 and the central block 31.

Figure 2B shows, by way of example and schematically, the structure thereof.

The second connecting block 60 preferably has a height H2 that is less than the height of the median 21 and central 31 blocks it connects, and a width L3 (the transverse dimension of the channel) that is less than the length L4 thereof (the longitudinal dimension of the channel). According to a preferred embodiment, the width L3 can be chosen to be equal to approximately 3% of the transverse semi-dimension STL of the tread.

According to some embodiments, the central block 31 may also have a longitudinal evolution that is substantially rectilinear.

Moreover, according to other embodiments, the central block 31 may have a third cross-section S3, taken along the line C-C of Figure 2, that is substantially trapezoidal, as can be appreciated in Figure 3D. Said third substantially trapezoidal cross-section S3, has respective oblique sides inclined about 4°-6° with respect to the direction normal to the tread, preferably about 5°.

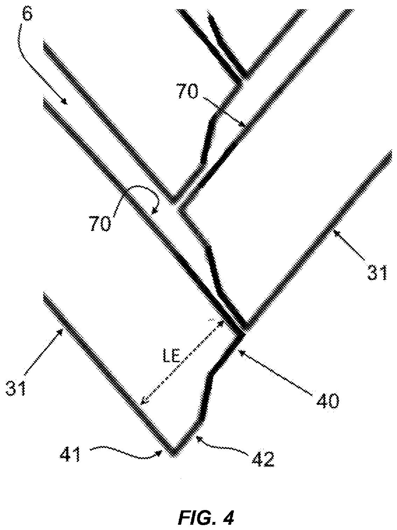

The tread according to the present invention also provides for the central block 31 to include an extremal protruding block 41 at one of the external walls 40 thereof. The projecting block 41 has a contact face 42 which is such to be substantially parallel to a lateral surface 70 of a further central block 31, which it faces, at the "V" formed vertex of the tread element 5. Such a configuration, visible in Figures 1, 2 and 4, is advantageous insofar as it makes it possible to increase the stiffness of the tread in order to improve performance during braking.

According to the invention, the extremal protruding block 41 occupies about 2/3 of the overall width LE of the extremal wall 40 of the block 31.

According to the invention, it is provided for the contact face 42, in turn, to occupy 1/4 of the overall width LE of the extremal wall 40 of the block 31.

The shape is such that the contact face 42 does not normally touch the surface 70 of the adjacent block, but is in any case such to substantially and significantly restrict the groove 6 at the vertex of the "V". The sizing is such that during braking there is effectively contact between the two walls 42 and 70.

Again with reference to the region of the tread corresponding to the vertex of the "V", it is furthermore preferable that the extremal wall 40 of the block 31 has a quarter angle ϕ with respect to the line TL (orthogonal to the center line CL of the tread). According to preferred embodiments, this angle may vary between 40° and 60°.

As already indicated for the other characteristic angles α, β, γ, the fourth angle ϕ can also be chosen as a function of the pneumatic tyre size. For example, for a pneumatic tyre of the size 205/55 R16, the fourth angle ϕ is preferably equal to about 50.25°.

The present invention has heretofore been described with reference to the preferred embodiments thereof. It is intended that each of the technical solutions implemented in the preferred embodiments described herein by way of example can advantageously be combined in different ways between them, in order to give form to other embodiments, which belong to the same inventive nucleus and that all fall within the scope of protection afforded by the claims recited hereinafter.

## Claims

1. Tread (1) for a pneumatic tyre, comprising a sequence of tread elements (5) placed in succession and interspersed with first grooves (6), each tread element (5) having an overall "V" shape with two lateral wings (7, 7'), each of said lateral wings (7, 7') being formed by three tread blocks (11, 21, 31) separated by second grooves (15, 16), wherein each of said three tread blocks (11, 21, 31) comprises at least a shoulder block (11) having a first major extension direction (SPD) inclined by a first angle (α) with respect to a transverse line (TL) orthogonal to a center line (CL) of the tread of between 8° and 12°, wherein each of said three tread blocks (11, 21, 31) comprises a central block (31) having a third major extension direction (CPD) inclined by a third angle (γ) with respect to the transverse line (TL) orthogonal to the center line (CL) of the tread of between 40° and 60°, **characterised in that** said central block (31) has an extremal wall (40) having a protruding portion (41) with a contact surface (42) substantially parallel to a lateral surface (70) of a further central block (31) which it faces at the vertex of said "V" form of the tread element (5),
wherein the extremal protruding portion (41) occupies about 2/3 of an overall width (LE) of the extremal wall (40) of the central block (31) and the contact surface (42) occupies 1/4 of the overall width (LE) of the extremal wall (40) of the central block (31), the arrangement being such that the contact surface (42) restricts the first groove (6) at the vertex of the "V" without normally touching the lateral surface (70) of the adjacent further central block (31) and such that during braking there is contact between the contact surface (42) and the lateral surface (70).

2. Tread (1) according to claim 1, wherein said shoulder block (11) has a longitudinal extension dimension (SD) equal to at least 40% of a transverse semi-dimension (STL) of the tread.

3. Tread (1) according to claim 1 or 2, wherein said central block (31) has a longitudinal extension dimension (CD) of at least 20% of a transverse semi-dimension (STL) of the tread.

4. Tread (1) according to one of the preceding claims, wherein said shoulder block (11) has a first cross-section (S1) which is substantially trapezoidal, said shoulder block (11) having a first leading surface (111) inclined by about 10° with respect to a direction normal to the tread, at a second trailing surface (112) inclined by about 5°with respect to said direction normal to the tread.

5. Tread (1) according to one of the preceding claims, wherein each of said three tread blocks (11, 21, 31) comprise a median block (21) having a second major extension direction (MPD) inclined by a second angle (β) with respect to the line (TL) orthogonal to the center line (CL) of the tread of between 27° and 47°.

6. Tread (1) according to claim 5, wherein said median block (21) has a longitudinal extension dimension (MD) of at least 20% of a transverse semi-dimension (STL) of the tread.

7. Tread (1) according to one of claims 5 to 6, wherein said shoulder block (11) and median block (21) are separated by an outer groove (15) of said second grooves (15, 16), said outer groove (15) having an outer grooved channel (17) having a channel direction (ECD) inclined with respect to said transverse line (TL) orthogonal to said center line (CL), by an external angle (δ) of less than 90°.

8. Tread (1) according to one of claims 5 to 7, wherein said shoulder block (11) and median block (21) are separated by an outer groove (15) of said second grooves (15, 16), said outer groove (15) having an outer grooved channel (17) that is not rectilinear but "Z" shaped.

9. Tread (1) according to one of claims 5 to 8, wherein said shoulder block (11) and median block (21) are separated by an outer groove (15) of said second grooves (15, 16), said outer groove (15) having an outer grooved channel (17), within which a first connecting block (50) is provided between said shoulder block (11) and median block (21), said first connecting block (50) having a height (H1) that is less than the height of said shoulder block (11) and median block (21) and a width (L1) that is less than the length (L2) of said outer grooved channel (17).

10. Tread (1) according to one of claims 5 to 9, wherein said median block (21) has a second substantially trapezoidal cross-section (S2) and respective oblique sides, inclined between 4° and 6°with respect to a direction normal to the tread.

11. Tread (1) according to one of claims 5 to 10, wherein said median block (21) and central block (31) are separated by an inner groove (16) of said second grooves (15, 16), said inner groove (16) having an inner grooved channel (18) having a channel direction (ICD) inclined with respect to said transverse line (TL) orthogonal to said center line (CL), by an internal angle (θ) of less than or equal to 90°.

12. Tread (1) according to one of claims 5 to 11, wherein said median block (21) and central block (31) are separated by an inner groove (16) of said second grooves (15, 16), said inner groove (16) having a rectilinear inner grooved channel (18).

13. Tread (1) according to one of claims 5 to 12, wherein said median block (21) and central block (31) are separated by an inner groove (16) of said second grooves (15, 16), said inner groove (16) having an inner grooved channel (18) within which a second connecting block (60) is provided between said median block (21) and central block (31), said second connecting block (60) having a height (H2) that is less than the height of said median block (21) and central block (31) and a width (L3) that is less than the length (L4) of said inner grooved channel (18).

14. Tread (1) according to one of claims 1 to 13, wherein said central block (31) has a third substantially trapezoidal cross-section (S3) and respective oblique sides inclined about 5° with respect to a direction normal to the tread.

15. Pneumatic tyre (100), comprising a tread (1) according to any of the preceding claims.

## Patentansprüche

1. Lauffläche (1) für einen Luftreifen, umfassend eine Abfolge von Laufflächenelementen (5), die nacheinander platziert und mit ersten Rillen (6) durchsetzt sind, wobei jedes Laufflächenelement (5) eine allumfassende "V"-Form mit zwei seitlichen Flanken (7, 7') aufweist, wobei jede der seitlichen Flanken (7, 7') durch drei Laufflächenblöcke (11, 21, 31) gebildet ist, die durch zweite Rillen (15, 16) getrennt sind, wobei jeder der drei Laufflächenblöcke (11, 21, 31) mindestens einen Schulterblock (11) mit einer ersten Haupterstreckungsrichtung (SPD) aufweist, die um einen ersten Winkel (α) in Bezug auf eine querverlaufende Linie (TL) orthogonal zu einer Mittellinie (CL) der Lauffläche zwischen 8° und 12° geneigt ist, wobei jeder der drei Laufflächenblöcke (11, 21, 31) einen mittleren Block (31) mit einer dritten Haupterweiterungsrichtung (CPD) aufweist, die um einen dritten Winkel (γ) in Bezug auf die querverlaufende Linie (TL) orthogonal zur Mittellinie (CL) der Lauffläche zwischen 40° und 60° geneigt ist, **dadurch gekennzeichnet, dass** der mittlere Block (31) eine extremale Wand (40) mit einem vorstehenden Abschnitt (41) mit einer Kontaktfläche (42) im Wesentlichen parallel zu einer Seitenfläche (70) eines weiteren mittleren Blocks (31) aufweist, der dem Scheitelpunkt der "V"-Form des Laufflächenelements (5) zugewandt ist,
wobei der extremale vorstehende Abschnitt (41) etwa 2/3 einer Gesamtbreite (LE) der extremalen Wand (40) des mittleren Blocks (31) einnimmt und die Kontaktfläche (42) 1/4 der Gesamtbreite (LE) der extremalen Wand (40) des mittleren Blocks (31) einnimmt, wobei die Anordnung derart ist, dass die Kontaktfläche (42) die erste Rille (6) am Scheitelpunkt des "V" begrenzt, ohne normalerweise die Seitenfläche (70) des benachbarten weiteren mittleren Blocks zu berühren und derart, dass beim Bremsen Kontakt zwischen der Kontaktfläche (42) und der Seitenfläche (70) besteht.

2. Lauffläche (1) nach Anspruch 1, wobei der Schulterblock (11) eine Längserstreckungsabmessung (SD) gleich mindestens 40 % einer querverlaufenden Halbabmessung (STL) der Lauffläche aufweist.

3. Lauffläche (1) nach Anspruch 1 oder 2, wobei der mittlere Block (31) eine Längserstreckungsabmessung (CD) von mindestens 20 % einer querverlaufenden Halbabmessung (STL) der Lauffläche aufweist.

4. Lauffläche (1) nach einem der vorstehenden Ansprüche, wobei der Schulterblock (11) einen ersten Querschnitt (S1) aufweist, der im Wesentlichen trapezförmig ist, wobei der Schulterblock (11) eine erste vordere Oberfläche (111) aufweist, die um etwa 10° in Bezug auf eine Richtung senkrecht zu der Lauffläche an einer zweiten hinteren Oberfläche (112) um etwa 5° in Bezug auf die Richtung senkrecht zu der Lauffläche geneigt ist.

5. Lauffläche (1) gemäß einem der vorstehenden Ansprüche, wobei jeder der drei Laufflächenblöcke (11, 21, 31) einen Medianblock (21) mit einer zweiten Hauptverlängerungsrichtung (MPD) umfasst, die um einen zweiten Winkel (β) in Bezug auf die Linie (TL) orthogonal zur Mittellinie (CL) der Lauffläche zwischen 27° und 47° geneigt ist.

6. Lauffläche (1) nach Anspruch 5, wobei der Medianblock (21) eine Längserstreckungsabmessung (MD) von mindestens 20 % einer querverlaufenden Halbabmessung (STL) der Lauffläche aufweist.

7. Lauffläche (1) nach einem der Ansprüche 5 bis 6, wobei der Schulterblock (11) und der Medianblock (21) durch eine äußere Rille (15) der zweiten Rillen (15, 16) getrennt sind, wobei die äußere Rille (15) einen äußeren Rillenkanal (17) mit einer Kanalrichtung (ECD) aufweist, die in Bezug auf die querverlaufende Linie (TL) orthogonal zu der Mittellinie (CL) um einen Außenwinkel (δ) von weniger als 90° geneigt ist.

8. Lauffläche (1) nach einem der Ansprüche 5 bis 7, wobei der Schulterblock (11) und der Medianblock (21) durch eine äußere Rille (15) der zweiten Rillen (15, 16) getrennt sind, wobei die äußere Rille (15) einen äußeren Rillenkanal (17) aufweist, der nicht geradlinig, sondern "Z"-geformt ist.

9. Lauffläche (1) nach einem der Ansprüche 5 bis 8, wobei der Schulterblock (11) und der Medianblock (21) durch eine äußere Rille (15) der zweiten Rillen (15, 16) getrennt sind, wobei die äußere Rille (15) einen äußeren Rillenkanal (17) aufweist, innerhalb dessen ein erster Verbindungsblock (50) zwischen dem Schulterblock (11) und dem Medianblock (21) bereitgestellt ist, wobei der erste Verbindungsblock (50) eine Höhe (H1), die kleiner als die Höhe des Schulterblocks (11) und des Medianblock (21) ist, und eine Breite (L1), die kleiner als die Länge (L2) des äußeren Rillenkanals (17) ist, aufweist.

10. Lauffläche (1) nach einem der Ansprüche 5 bis 9, wobei der Medianblock (21) einen zweiten im Wesentlichen trapezförmigen Querschnitt (S2) und jeweilige schräge Seiten aufweist, die in Bezug auf eine Richtung senkrecht zu der Lauffläche zwischen 4° und 6° geneigt sind.

11. Lauffläche (1) nach einem der Ansprüche 5 bis 10, wobei der Medianblock (21) und der mittlere Block (31) durch eine innere Rille (16) der zweiten Rillen (15, 16) getrennt sind, wobei die innere Rille (16) einen inneren Rillenkanal (18) mit einer Kanalrichtung (ICD) aufweist, die in Bezug auf die querverlaufende Linie (TL) orthogonal zu der Mittellinie (CL) um einen Innenwinkel (θ) von weniger als oder gleich 90° geneigt ist.

12. Lauffläche (1) nach einem der Ansprüche 5 bis 11, wobei der Medianblock (21) und der mittlere Block (31) durch eine innere Rille (16) der zweiten Rillen (15, 16) getrennt sind, wobei die innere Rille (16) einen geradlinigen inneren Rillenkanal (18) aufweist.

13. Lauffläche (1) nach einem der Ansprüche 5 bis 12, wobei der Medianblock (21) und der mittlere Block (31) durch eine innere Rille (16) der zweiten Rillen (15, 16) getrennt sind, wobei die innere Rille (16) einen inneren Rillenkanal (18) aufweist, innerhalb dessen ein zweiter Verbindungsblock (60) zwischen dem Medianblock (21) und dem mittleren Block (31) bereitgestellt ist, wobei der zweite Verbindungsblock (60) eine Höhe (H2), die kleiner als die Höhe des Medianblocks (21) und des mittleren Blocks (31) ist, und eine Breite (L3), die kleiner als die Länge (L4) des inneren Rillenkanals (18) ist, aufweist.

14. Lauffläche (1) nach einem der Ansprüche 1 bis 13, wobei der mittlere Block (31) einen dritten im Wesentlichen trapezförmigen Querschnitt (S3) und jeweilige schräge Seiten aufweist, die in Bezug auf eine Richtung senkrecht zu der Lauffläche um 5° geneigt sind.

15. Luftreifen (100), umfassend eine Lauffläche (1) nach einem der vorstehenden Ansprüche.

## Revendications

1. Bande de roulement (1) pour un pneumatique, comprenant une séquence d'éléments de bande de roulement (5) placés successivement et entrecoupés de premières rainures (6), chaque élément de bande de roulement (5) ayant une forme globale en « V » avec deux ailes latérales (7, 7'), chacune desdites ailes latérales (7, 7') étant formée de trois blocs de bande de roulement (11, 21, 31) séparés par de secondes rainures (15, 16), dans laquelle chacun desdits trois blocs de bande de roulement (11, 21, 31) comprend au moins un bloc d'épaulement (11) ayant une première direction d'extension principale (SPD) inclinée d'un premier angle (α) par rapport à une ligne transversale (TL) orthogonale à une ligne centrale (CL) de la bande de roulement d'entre 8° et 12°, dans laquelle chacun desdits trois blocs de bande de roulement (11, 21, 31) comprend un bloc central (31) ayant une troisième direction d'extension principale (CPD) inclinée d'un troisième angle (γ) par rapport à la ligne transversale (TL) orthogonale à la ligne centrale (CL) de la bande de roulement d'entre 40° et 60°, **caractérisée en ce que** ledit bloc central (31) a une paroi extrême (40) ayant une portion saillante (41) avec une surface de contact (42) sensiblement parallèle à une surface latérale (70) d'un autre bloc central (31) auquel il fait face au niveau du sommet de ladite forme en « V » de l'élément de bande de roulement (5),
dans laquelle la portion saillante extrême (41) occupe environ 2/3 d'une largeur globale (LE) de la paroi extrême (40) du bloc central (31) et la surface de contact (42) occupe 1/4 de la largeur globale (LE) de la paroi extrême (40) du bloc central (31), l'agencement étant de telle sorte que la surface de contact (42) restreint la première rainure (6) au niveau du sommet du « V » sans toucher normalement la surface latérale (70) de l'autre bloc central (31) adjacent et de telle sorte qu'au cours du freinage il y a contact entre la surface de contact (42) et la surface latérale (70).

2. Bande de roulement (1) selon la revendication 1, dans laquelle ledit bloc d'épaulement (11) a une dimension d'extension longitudinale (SD) égale à au moins 40 % d'une semi-dimension transversale (STL) de la bande de roulement.

3. Bande de roulement (1) selon la revendication 1 ou 2, dans laquelle ledit bloc central (31) a une dimension d'extension longitudinale (CD) d'au moins 20 % d'une semi-dimension transversale (STL) de la bande de roulement.

4. Bande de roulement (1) selon l'une des revendications précédentes, dans laquelle ledit bloc d'épaulement (11) a une première section transversale (S1) qui est sensiblement trapézoïdale, ledit bloc d'épaulement (11) ayant une première surface d'attaque (111) inclinée d'environ 10° par rapport à une direction normale à la bande de roulement, au niveau d'une seconde surface de fuite (112) inclinée d'environ 5° par rapport à ladite direction normale à la bande de roulement.

5. Bande de roulement (1) selon l'une des revendications précédentes, dans laquelle chacun desdits trois blocs de bande de roulement (11, 21, 31) comprend un bloc médian (21) ayant une deuxième direction d'extension principale (MPD) inclinée d'un deuxième angle (β) par rapport à la ligne (TL) orthogonale à la ligne centrale (CL) de la bande de roulement d'entre 27° et 47°.

6. Bande de roulement (1) selon la revendication 5, dans laquelle ledit bloc médian (21) a une dimension d'extension longitudinale (MD) d'au moins 20 % d'une semi-dimension transversale (STL) de la bande de roulement.

7. Bande de roulement (1) selon l'une des revendications 5 à 6, dans laquelle lesdits bloc d'épaulement (11) et bloc médian (21) sont séparés par une rainure externe (15) desdites secondes rainures (15, 16), ladite rainure externe (15) ayant un canal rainuré externe (17) ayant une direction de canal (ECD) inclinée par rapport à ladite ligne transversale (TL) orthogonale à ladite ligne centrale (CL), d'un angle extérieur (δ) inférieur à 90°.

8. Bande de roulement (1) selon l'une des revendications 5 à 7, dans laquelle lesdits bloc d'épaulement (11) et bloc médian (21) sont séparés par une rainure externe (15) desdites secondes rainures (15, 16), ladite rainure externe (15) ayant un canal rainuré externe (17) qui n'est pas rectiligne mais en forme de « Z ».

9. Bande de roulement (1) selon l'une des revendications 5 à 8, dans laquelle lesdits bloc d'épaulement (11) et bloc médian (21) sont séparés par une rainure externe (15) desdites secondes rainures (15, 16), ladite rainure externe (15) ayant un canal rainuré externe (17), au sein duquel un premier bloc de connexion (50) est prévu entre lesdits bloc d'épaulement (11) et bloc médian (21), ledit premier bloc de connexion (50) ayant une hauteur (H1) qui est inférieure à la hauteur desdits bloc d'épaulement (11) et bloc médian (21) et une largeur (L1) qui est inférieure à la longueur (L2) dudit canal rainuré externe (17).

10. Bande de roulement (1) selon l'une des revendications 5 à 9, dans laquelle ledit bloc médian (21) a une deuxième section transversale sensiblement trapézoïdale (S2) et des côtés obliques respectifs, inclinés entre 4° et 6° par rapport à une direction normale à la bande de roulement.

11. Bande de roulement (1) selon l'une des revendications 5 à 10, dans laquelle lesdits bloc médian (21) et bloc central (31) sont séparés par une rainure interne (16) desdites secondes rainures (15, 16), ladite rainure interne (16) ayant un canal rainuré interne (18) ayant une direction de canal (ICD) inclinée par rapport à ladite ligne transversale (TL) orthogonale à ladite ligne centrale (CL), d'un angle intérieur (θ) inférieur ou égal à 90°.

12. Bande de roulement (1) selon l'une des revendications 5 à 11, dans laquelle lesdits bloc médian (21) et bloc central (31) sont séparés par une rainure interne (16) desdites secondes rainures (15, 16), ladite rainure interne (16) ayant un canal rainuré interne rectiligne (18).

13. Bande de roulement (1) selon l'une des revendications 5 à 12, dans laquelle lesdits bloc médian (21) et bloc central (31) sont séparés par une rainure interne (16) desdites secondes rainures (15, 16), ladite rainure interne (16) ayant un canal rainuré interne (18) au sein duquel un second bloc de connexion (60) est prévu entre lesdits bloc médian (21) et bloc central (31), ledit second bloc de connexion (60) ayant une hauteur (H2) qui est inférieure à la hauteur desdits bloc médian (21) et bloc central (31) et une largeur (L3) qui est inférieure à la longueur (L4) dudit canal rainuré interne (18).

14. Bande de roulement (1) selon l'une des revendications 1 à 13, dans laquelle ledit bloc central (31) a une troisième section transversale sensiblement trapézoïdale (S3) et des côtés obliques respectifs inclinés d'environ 5° par rapport à une direction normale à la bande de roulement.

15. Pneumatique (100), comprenant une bande de roulement (1) selon l'une quelconque des revendications précédentes.
